# EUROPÄISCHE PATENTSCHRIFT

(11) **EP 3 287 180 B1**
(45) Veröffentlichungstag und Bekanntmachung des Hinweises auf die Patenterteilung: **10.04.2019**
(21) Anmeldenummer: 16185771.9
(22) Anmeldetag: 25.08.2016
(51) Int. Cl.: B01D 35/027, B01D 35/147, B01D 29/21

(54) **SAUGRÜCKLAUFFILTER**
SUCTION RETURN FILTER
FILTRE DE RETOUR D'ASPIRATION

(43) Veröffentlichungstag der Anmeldung: 28.02.2018
(73) Patentinhaber: WALTER STAUFFENBERG GMBH & CO. KG, 58791 Werdohl (DE)
(72) Erfinder: Hamm, Thorsten, 58507 Lüdenscheid (DE)
(74) Vertreter: Patentanwälte Dörner & Kötter PartG mbB

(56) Entgegenhaltungen:
- EP-A1- 2 524 723
- WO-A1-02/062447
- WO-A1-2008/030323
- WO-A2-2005/063358
- DE-A1-102007 056 362
- US-A1- 2002 043 495

## Beschreibung

Die Erfindung betrifft einen Saugrücklauffilter mit einem Filtergehäuse, umfassend einen zwei Nutzanschlüsse aufweisenden Anschlusskopf und ein mit einem Tankanschluss versehenes Tankanschlussstück, zwischen denen ein eine erste Filterkammer ausbildendes Hülsenteil befestigt ist, das ein von dichtend in dem Anschlusskopf und dem Tankanschlussstück angeordneten, jeweils einen Rohrstutzen aufweisenden Filteranschlussplatten aufgenommenes erstes Filterelement umgibt, wobei in dem Tankanschluss ein federbelastetes Rückschlagventil angeordnet ist, sowie ein lastfreies Rückschlagventil, das als integraler Bestandteil des federbelasteten Rückschlagventils ausgebildet ist. Derartige Filtervorrichtungen, wie sie aus der EP 1 169 105 B1 bekannt sind, dienen der Bereitstellung von filtriertem Fluid für einen an einem Nutzanschluss angeschlossenen Verbraucher. Hierzu sind die bekannten Saugrücklauffilter zum direkten Einsatz an dem Tankanschluss eines Ölbehälters vorgesehen und derart ausgelegt, dass Druckspitzen ohne Schäden aufgenommen werden können. Dabei ist über die Anordnung eines Rückschlagventils sichergestellt, dass im Falle einer Druckspitze im Tankanschluss bzw. dem Tank- oder Ölbehälter eine Druckspitze in Richtung der Nutzanschlüsse abgebaut werden kann. Zur Bauraumreduzierung ist in der EP 1 169 105 B1 vorgeschlagen, alle Rückschlagventile als Baugruppe zusammengefasst an einem Ende des Filtergehäuses anzuordnen, wobei die Rückschlagventile alle an dem Tankanschluss angeordnet sind. Nachteilig an dieser Ausgestaltung ist, dass in dem Fall, wenn aufgrund eines verstopften Filterlements das tankseitige Bypassventil öffnet, die an der Innenseite des Filtergehäuses anhaftende Schmutzschicht, der so genannte Filterkuchen, mit dem ablaufenden Öl in den Tank mitgerissen werden kann, wodurch eine Verschmutzung des in dem Tank befindlichen Öls einhergeht. Zudem kann das Bypassventil durch die mit dem Öl mitgerissene Schmutzschicht beeinträchtigt sein. DE 10 2007 056362 A1 zeigt einen Saugrücklauffilter mit zwei Filterelementen und einem federbelasteten Rückschlagventil.

Hier will die Erfindung Abhilfe schaffen. Der Erfindung liegt die Aufgabe zu Grunde, einen Saugrücklauffilter mit kompakter Bauweise bereitzustellen, bei dem im Falle eines Druckanstiegs im Filtergehäuse ein Druckabbau ohne die Gefahr einer erhöhten Ölverschmutzung oder der Beeinträchtigung eines Bypassventils ermöglicht ist. Gemäß der Erfindung wird diese Aufgabe durch die Merkmale des kennzeichnenden Teils des Patentanspruchs 1 gelöst.

Mit der Erfindung ist ein kompakter Saugrücklauffilter bereitgestellt, bei dem im Falle eines Druckanstiegs im Filtergehäuse ein Abbau der Druckspitzen ohne eine erhöhte Ölverschmutzung sowie ohne eine Beeinträchtigung eines Bypassventils gewährleistet ist. Durch die Anordnung einer zweiten Filterkammer, in dem Anschlusskopf, die ein zweites Filterelement aufnimmt und die über wenigstens eine mit einem federbelasteten in der Schließstellung gehaltenem Bypassventil versehene Leitung mit der ersten Filterkammer verbunden ist, ist der Abbau von Druckspitzen durch einen Ölmengenstrom erzielt, der durch das zweite Filterelement geführt wird. Hierdurch ist sichergestellt, dass auch in diesem Falle Schmutzpartikel ausgefiltert werden

Die zweite Filterkammer ist durch eine erste, obere Kappe gebildet, die über Streben mit einer zweiten, unteren Kappe verbunden ist, wodurch ein Stützkäfig für das zweite Filterelement gebildet ist, welches um die Streben herum positioniert ist. Hierdurch ist eine kompakte und gleichzeitig einfach aufgebaute Filterkammer erzielt, die eine formstabile Anordnung des zweiten Filterlements ermöglicht.

In Ausgestaltung der Erfindung sind die Streben an der ersten, oder der zweiten Kappe angeformt, welche Streben in Aufnahmen der gegenüberliegenden zweiten bzw. ersten Kappe eingreifen.

In weiterer Ausgestaltung der Erfindung ist der Stützkäfig zusammen mit dem ersten Filterelement über eine Feder gegen die Filteranschlussplatte, die an dem Hülsenteil anliegt, vorgespannt, wobei das Hülsenteil einen innerhalb des Kopfgehäuses des Anschlusskopfes angeordneten Vorsprung hintergreift. Hierdurch ist eine zuverlässige dichtende Verbindung des Hülsenteils mit dem Kopfgehäuse gewährleistet.

In weiterer Ausgestaltung der Erfindung ist die zweite, untere Kappe durch die Filteranschlussplatte des Anschlusskopfes gebildet, wobei deren Rohrstutzen einen beabstandet zur Filteranschlussplatte angeordneten Anschlag aufweist, an dem das erste Filterelement anliegt. Hierdurch ist ein definierter Spalt zwischen dem ersten Filterelement und der Filteranschlussplatte gebildet, wodurch ein ungehinderter Ölablauf bei überdruckbedingter Öffnung des Bypassventils gewährleistet ist. Bevorzugt ist die wenigstens eine Leitung durch jeweils eine in der Filteranschlussplatte beabstandet zum Rohrstutzen eingebrachte Bohrung gebildet.

In Weiterbildung der Erfindung sind mehrere, bevorzugt drei mit Bypassventilen versehene Leitungen vorhanden. Hierdurch ist eine gleichmäßige Beaufschlagung des zweiten Filters mit über die Bypassventile ausgebrachtem Ölstrom bewirkt. Zudem ist durch die Anordnung mehrerer Bypassventile ein zügiger Druckabbau erzielt.

In weiterer Ausgestaltung der Erfindung ist das zweite Filterelement gröber als das erste Filterelement ausgebildet. Hierdurch ist der Abbau eines Überdrucks in der ersten Filterkammer nach Öffnung des wenigstens einen Bypassventils unterstützt.

In Weiterbildung der Erfindung ist an die erste, obere Kappe beabstandet zu den Stegen wenigstens ein Hohlzylinder angeformt, in dem der Ventilstempel eines Bypassventils verschiebbar geführt ist. Hierdurch ist eine kompakte Integration des Bypassventils in den Stützkäfig erzielt. Bevorzugt ist zur Erzielung der erforderlichen Vorspannung des Ventilstempels den Hohlzylinder umfassend eine Druckfeder angeordnet.

In weiterer Ausgestaltung der Erfindung ist an dem Anschlusskopf wenigstens ein Anschluss für eine Kühlbypassleitung angeordnet. Hierdurch ist eine bedarfsweise Kühlung des den Saugrücklauffilter durchlaufenden Ölstroms ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

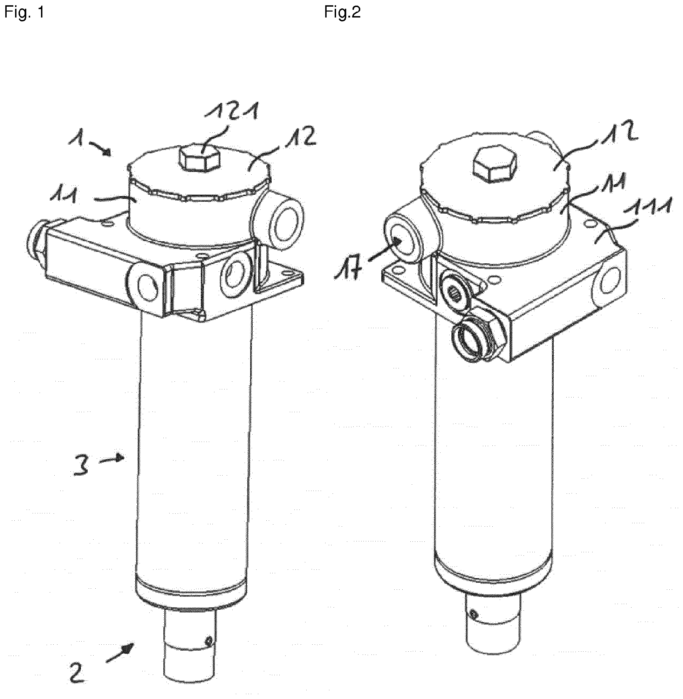

- Figur 1: die räumliche Darstellung eines Saugrücklauffilters;
- Figur 2: die Darstellung des Saugrücklauffilters aus Figur 1 in einer weiteren räumlichen Ansicht;

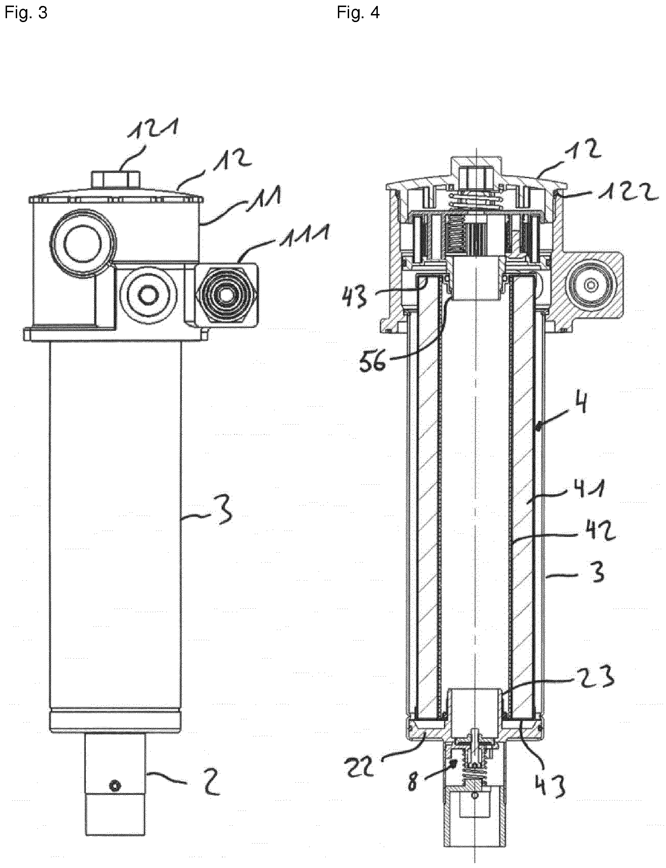

- Figur 3: die Darstellung des Saugrücklauffilters aus Figur 1 in der Seitenansicht;
- Figur 4: die Darstellung des Saugrücklauffilters aus Figur 1 im Längsschnitt;
- Figur 5: die Detaildarstellung des Anschlusskopfes des Saugrücklauffilters aus Figur 1 im Längsschnitt;
- Figur 6: die Detaildarstellung des Tankanschlussstücks des Saugrücklauffilters aus Figur 1 im Längsschnitt;

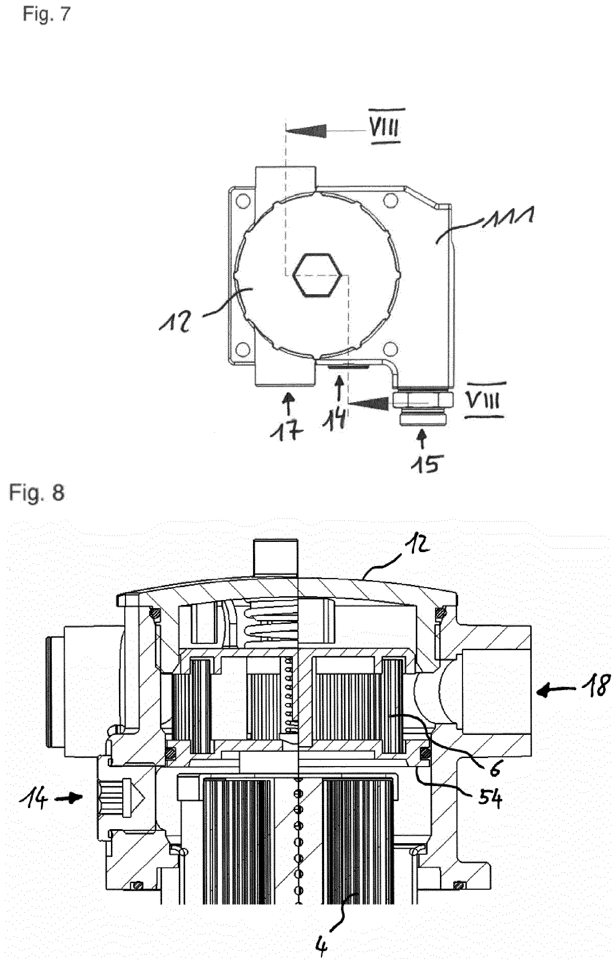

- Figur 7: die Darstellung des Saugrücklauffilters aus Figur 1 in der Draufsicht;
- Figur 8: die Detaildarstellung des Anschlusskopfes auf Figur 7 im Schnitt VIII - VIII;

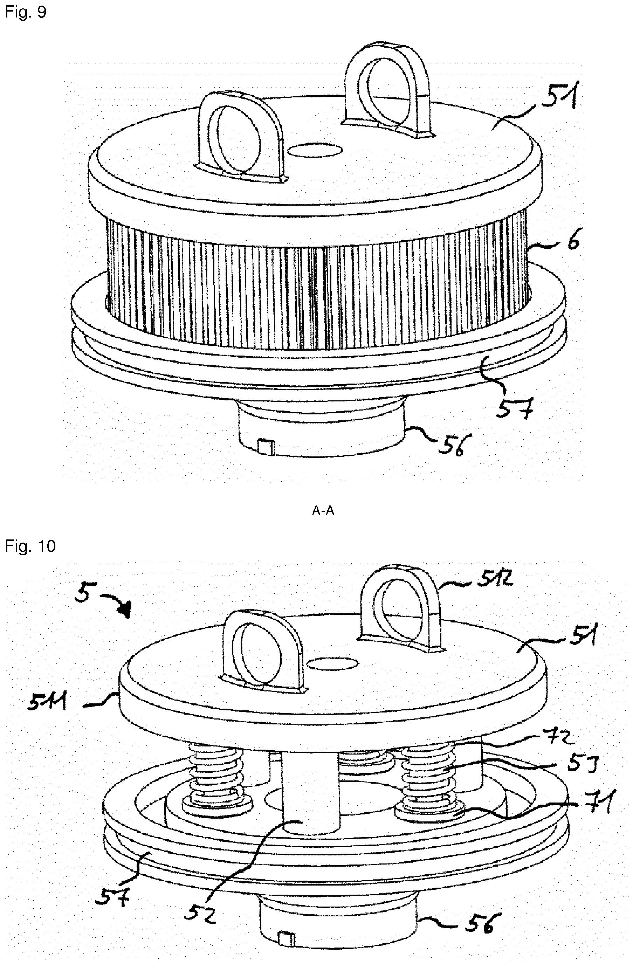

- Figur 9: die Darstellung des Stützkäfigs mit zweitem Filterelement des Saugrücklauffilters aus Figur 1;
- Figur 10: die räumliche Darstellung des Stützkäfigs aus Figur 9 ohne Filterelement;

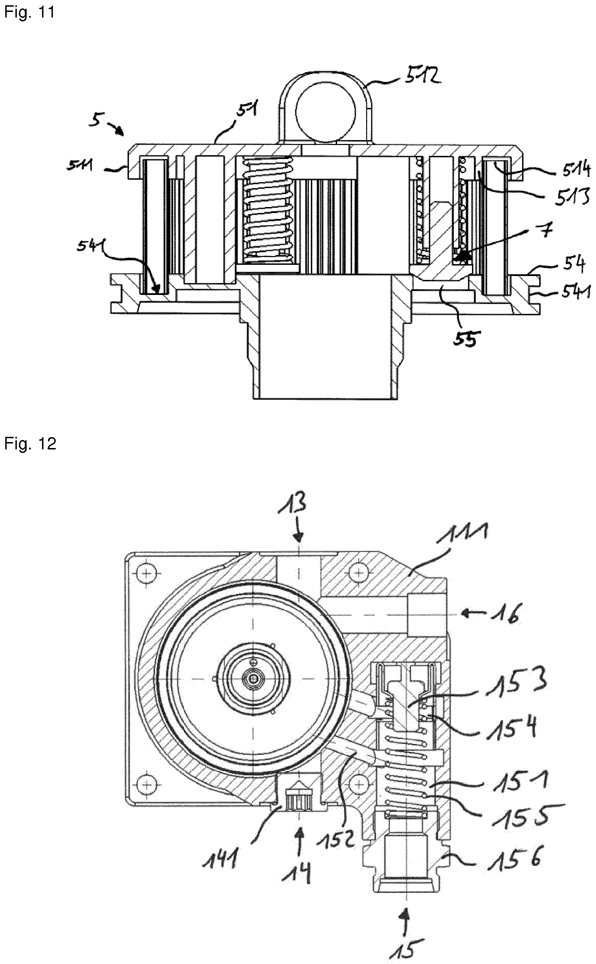

- Figur 11: die Darstellung des Stützkäfigs aus Figur 9 im Längsschnitt und
- Figur 12: die schematische Darstellung des Anschlusskopfes des Saugrücklauffilters aus Figur 1 im Querschnitt.

Der als Ausführungsbeispiel gewählte Saugrücklauffilter besteht im Wesentlichen aus einem Anschlusskopf 1, einem Tankanschlussstück 2 sowie einem Hülsenteil 3, das ein erstes Filterelement 4 aufnimmt. In dem Anschlusskopf 1 ist weiterhin ein Stützkäfig 5 vorhanden, der ein zweites Filterelement 6 aufnimmt.

Der Anschlusskopf 1 umfasst ein Kopfgehäuse 11, auf das ein Deckel 12 aufgeschraubt ist. Der Deckel 12 ist hierzu mit einer Sechskantanformung 121 versehen und mit einem O-Ring 122 gegenüber dem Kopfgehäuse 11 abgedichtet. Im Bereich der Sechskantanformung 121 ist der Deckel 12 innen mit einer Ringnut 123 zur Aufnahme einer Druckfeder 124 versehen.

Das Kopfgehäuse 11 ist im Wesentlichen hohlzylindrisch ausgebildet. An seinem dem Deckel 12 gegenüberliegenden Ende ist an dem Kopfgehäuse 11 außen umlaufend ein Anschlussblock 111 angeformt. In dem Anschlussblock 111 ist ein erster Zulauf 13 sowie koaxial diesem gegenüberliegend ein zweiter Zulauf 14 eingebracht, die in dem Kopfgehäuse 11 münden. Im Ausführungsbeispiel ist der zweite Zulauf 14 mit einem Verschlussstopfen 141 versehen. Benachbart zu dem zweiten Zulauf 14 ist in dem Anschlussblock 111 weiterhin ein dritter Zulauf 15 angeordnet. Der dritte Zulauf 15 ist durch eine Sackbohrung 151 gebildet, die über zwei parallel zueinander angeordnete Kanäle 152 mit dem Kopfgehäuse 11 verbunden ist. In die Sackbohrung 151 ist ein Thermoelement 153 eingebracht, das mit einem Schieber 154 verbunden ist und das über eine Druckfeder 155 gegen einen Einschraubstutzen 156 vorgespannt ist, die in die Sackbohrung 151 eingeschraubt ist. Der Schieber 154 ist derart ausgebildet, das die Kanäle 152 bei Ausdehnung des Thermoelements 153 durch den Schieber 154 verschließbar sind. Orthogonal zu dem ersten Zulauf 13 ist weiterhin in den Anschlussblock 111 ein Kühlerzulauf 16 eingebracht, der in den ersten Zulauf 13 mündet. Oberhalb des Anschlussblocks 111 ist an dem Kopfgehäuse 11 weiterhin ein erster Ablauf 17 sowie ein zweiter Ablauf 18 angeordnet.

In das Kopfgehäuse 11 ist ein Stützkäfig 5 eingebracht, der eine Filterkammer für das zweite Filterelement 6 ausbildet. Der Stützkäfig 5 besteht aus einer oberen Kappe 51 und einer Filteranschlussplatte 54, die über Streben 52 miteinander verbunden sind. Die Streben 52 sind an die obere Kappe 51 angeformt und greifen in korrespondierende Aufnahmen ein, die hierzu in der Filteranschlussplatte 54 angeordnet sind. Umlaufend ist an die obere Kappe 51 an ihrer der Filteranschlussplatte 54 zugewandten Seite ein Rand 511 angeformt. Parallel zu dem umlaufenden Rand 511 ist an die obere Kappe 51 ein umlaufender Steg 513 angeformt, der mit dem umlaufenden Rand 511 eine Nut 514 zur Aufnahme des zweiten Filterlements 6 begrenzt. An ihrer der Nut 514 gegenüberliegenden Oberseite sind an die obere Kappe 51 weiterhin zwei Führungslaschen 512 angeformt.

Zwischen jeweils zwei der drei an die obere Kappe 51 angeformten Streben 52 ist jeweils ein Hohlzylinder 53 angeformt, der einen Ventilstempel 71 aufnimmt, wodurch jeweils ein Bypassventil 7 gebildet ist. Die in den drei Hohlzylindern 53 jeweils geführten Ventilstempel 71 liegen dichtend an in die Filteranschlussplatte 54 eingebrachte Bohrungen 55 an, wobei die Ventilstempel 71 über Druckfedern 72, die außen um die Hohlzylinder 53 angeordnet sind, gegen die Bohrungen 55 vorgespannt sind.

Der Nut 514 gegenüberliegend weist die Filteranschlussplatte 54 ebenfalls eine Nut 541 auf, die das zweite Filterelement 6 aufnimmt. Zentrisch ist an der Filteranschlussplatte 54 diese durchdringend ein Rohrstutzen 56 angebracht, der außen umlaufend mit einem Absatz 561 zur Anlage der oberen Endkappe 43 des ersten Filterlements 4 versehen ist. Außen ist die Filteranschlussplatte 54 umlaufend mit einer Ringnut 57 zur Aufnahme eines O-Rings 58 versehen, über den die Filteranschlussplatte 54 gegenüber dem Kopfgehäuse 11 abgedichtet ist.

Das Hülsenteil 3, welches das erste Filterelement 4 aufnimmt, ist zwischen dem Anschlusskopf 1 und dem Tankanschlussstück angeordnet und mit diesem fest verbunden, wobei das Hülsenteil 3 endseitig einen innerhalb des Kopfgehäuses 11 des Anschlusskopfes 1 angeordneten Vorsprung über einen Dichtring dichtend hintergreift. Das Hülsenteil 3 ist über die von dem Deckel 12 aufgenommenen Druckfeder 124, die den Stützkäfig 5 zusammen mit dem ersten Filterelement 4 gegen das Hülsenteil verspannt, gegen den innerhalb des Kopfgehäuses 11 angeordneten Vorsprung vorgespannt. Zwischen dem Vorsprung und den diesen hintergreifenden Endabschnitt des Hülsenteils 3 ist ein Dichtring angeordnet.

Das erste Filterelement 4 ist gebildet durch ein Stützrohr 42, das von einer Filtermatte 41 umgeben ist und das endseitig zur Einfassung der Filtermatte 41 mit Endkappen 43 versehen ist. Im montierten Zustand ragen die Rohrstreben 56, 23 der oberen bzw. unteren Filteranschlussplatte abdichtend in das Stützrohr 42 des ersten Filterlements ein, wodurch dieses innerhalb des Hülsenteils 3 gehalten ist.

An ihrer dem Anschlusskopf 1 gegenüberliegenden Seite ist das Hülsenteil 3 mit dem eine Tankanschluss 27 aufweisenden Tankanschlussstück 2 verbunden. Das Tankanschlussstück 2 umfasst eine Filteranschlussplatte 22, welche eine Tülle 26 aufnimmt und die an ihrer der Tülle 26 abgewandten Seite mit einem Rohrstutzen 23 versehen ist. An seiner der Filteranschlussplatte 22 zugewandten Seite ist an den Rohrstutzen 23 endseitig ein nach innen ragender ringförmiger Vorsprung 232 angeformt. Der Rohrstutzen 23 ist wiederum außen umlaufend mit einem Absatz 231 versehen, der als Anschlag für die dem Tankanschlussstück 2 zugewandte Endkappe 43 des ersten Filterlements 4 dient. Außen umlaufend ist die Filteranschlussplatte 22 mit einer Ringnut 24 zur Aufnahme eines O-Rings 25 versehen, welcher der Abdichtung der Filteranschlussplatte 22 gegenüber dem Hülsenteil 3 dient.

In dem Tankanschluss 27 ist den Rohrstutzen 23 der Filteranschlussplatte 22 verschließend eine Rückschlagventileinheit 8 angeordnet. Die Rückschlagventileinheit 8 umfasst eine Schließplatte 81, die an einem Schließteil 83 anliegt, das eine Bohrung mit einer diesen einfassenden Führungsbuchse 831 aufweist, durch die ein Schraubenbolzen 82 geführt ist, der in eine Gewindebohrung der Schließplatte 81 eingeschraubt ist. Das Schließteil 83 ist über eine Druckfeder 84 gegen den Vorsprung 232 des Rohrstutzens 23 vorgespannt, die sich an ihrem dem Schließteil 83 gegenüberliegenden Ende an einen Zapfen 261 abstützt, der an einer Tülle 26 angeformt ist, die endseitig an dem Tankanschlussgehäuse 21 befestigt ist.

Die Rückschlagventileinheit 8 umfasst damit ein federbelastetes Rückschlagventil, das durch das mit der Druckfeder 84 verbundene Schließteil 83 gebildet ist, sowie ein integriertes lastfreies Rückschlagventil, das durch die Schließplatte 81 gebildet ist, welche über den Schraubenbolzen 82 in dem Schließteil 83 geführt ist.

Bei Normalbetrieb des Saugrücklauffilters stellt einer der Zuläufe 13, 14, 15 den fluidführenden Eingang dar, wobei das erste Filterelement 4 von außen nach innen durchströmt wird und die Hauptfiltration des Fluids übernimmt. Das so gereinigte Fluid strömt sodann durch das Stützrohr 42 des ersten Filterelements 4 durch den Rohrstutzen 56 der Filteranschlussplatte 54 in den Stützkäfig 5 und von dort durch das zweite Filterelement 6, das gröber ausgebildet ist, als das erste Filterelement 4, zu dem ersten Ablauf 17. Der erste Ablauf 17 ist im Ausführungsbeispiel zweifach ausgelegt, wobei der nicht zu verwendende Anschluss (hier: zweiter Ablauf 18) jeweils über einen Verschlussstopfen verschließbar ist.

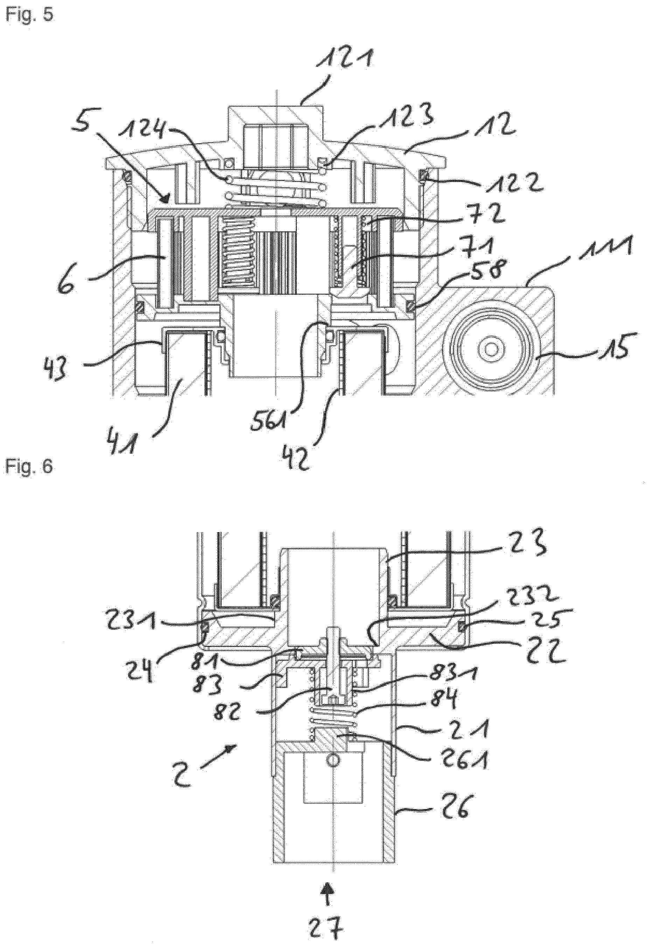

Wie insbesondere Figur 6 zu entnehmen ist, befindet sich in dem Tankanschluss 27 des Tankanschlussstücks 2 eine Rückschlagventileinheit 8, welche den Rohrstutzen 23 gegenüber dem Tankanschluss 27 dichtend verschließt. Wie zuvor dargestellt umfasst die Rückschlagventileinheit 8 zwei integrierte Rückschlagventile, nämlich ein das Schließteil 83 umfassendes federbelastetes Rückschlagventil und das die Schließplatte 81 umfassende, lastfreie Rückschlagventil. In dem Anschlusskopf 1 sind weiterhin Bypassventile 7 angeordnet, welche die in der Filteranschlussplatte 54 angeordneten Bohrungen 55 dichtend verschließen. Die Bohrungen 55 bilden Verbindungsleitungen zwischen dem durch das Hülsenteil 3 gebildeten ersten Filterraum und den durch den Stützkäfig 5 gebildeten zweiten Filterraum aus.

Nimmt der Druck im Inneren des ersten Filterelements 4 ab, da mehr Öl benötigt wird, als rückströmt, öffnet das die Schließplatte 81 umfassende lastfreie Ventil und gibt somit den Weg frei zwischen dem Tankanschluss 27 und dem Stützrohr 42. Von hier aus durchströmt das Fluid ungefiltert das Stützrohr 42 und gelangt durch den Rohrstutzen 56 in den Stützkäfig 5, von wo es das zweite Filterelement 6 durchströmt, von wo das so gefilterte Fluid zum Ablauf 7 gelangt. Ist der Druck im Inneren des ersten Filterlements 4 höherer als am Tankanschluss 27, was den Normalfall darstellt, verbleibt dieses die Schließplatte 81 umfassende Ventil in der geschlossenen Position. Bei einem vorgegebenen Schwellenwert in Abhängigkeit von der Vorspannkraft der Druckfeder 84 des federbelasteten Rückschlagventils öffnet das Schließteil 83 entgegen der Federkraft, sobald der Innendruck im ersten Filterelement 4 größer ist, als die Vorspannkraft der Druckfeder 84 in Verbindung mit dem im Tankanschluss 27 vorherrschenden Druck, der üblicherweise dem Umgebungsdruck entspricht. Schließplatte 81 und Schließteil 83 verfahren in diesem Fall in Richtung des Tankanschlusses 27.

Im Betrieb tritt das verschmutzte Fluid durch einen Zulauf 13, 14, 15 des Anschlussblocks 111 in die durch das Hülsenteil 3 gebildete erste Filterkammer ein, wird durch das erste Filterelement 4 feinstfiltriert und gelangt anschließend durch das Stützrohr 42 des ersten Filterlements 4 über den Rohrstutzen 56 in den Stützkäfig 5, wo es das - gröber ausgelegte - zweite Filterelement 6 durchströmt und durch den Ablauf 7 zum Verbraucher gelangt. Ist das erste Filterelement 4 durch übermäßige Verschmutzung zugesetzt, steigt der Druck in der ersten Kammer an, wodurch die Ventilstempel 71 der Bypassventile 7 in Richtung des Deckels 12 des Anschlusskopfes 1 gegen die Vorspannkraft der Druckfedern 72 nach oben bewegt werden, wodurch die Bohrungen 55 der Filteranschlussplatte 54 freigegeben werden. Das verschmutzte Öl gelangt nun durch die Bohrungen 55 in den Stützkäfig 5 und wird sodann durch das zweite Filterelement 6 filtriert, bevor es zum ersten Ablauf 17 gelangt. Die Rückschlagventileinheit 8 bleibt in diesem Fall in ihrer geschlossenen Position.

Durch die erfindungsgemäße Gestaltung des Saugrücklauffilters ist in jedem Fall einer Druckerhöhung eine Filtration des einströmenden, verschmutzten Fluids gewährleistet.

## Patentansprüche

1. Saugrücklauffilter mit einem Filtergehäuse, umfassend einen zwei Nutzanschlüsse aufweisenden Anschlusskopf (1) und ein mit einem Tankanschluss versehenes Tankanschlussstück (2), zwischen denen ein eine erste Filterkammer ausbildendes Hülsenteil (3) befestigt ist, das ein von dichtend in dem Anschlusskopf und dem Tankanschlussstück angeordneten, jeweils einen Rohrstutzen aufweisenden Filteranschlussplatten (54) aufgenommenes erstes Filterelement umgibt, wobei in dem Tankanschluss ein federbelastetes Rückschlagventil (8) angeordnet ist, sowie ein lastfreies Rückschlagventil, das als integraler Bestandteil des federbelasteten Rückschlagventils ausgebildet ist, **dadurch gekennzeichnet, dass** in dem Anschlusskopf (1) eine zweite Filterkammer angeordnet ist, die ein zweites Filterelement (6) aufnimmt und die über wenigstens eine mit einem federbelastet in der Schließstellung gehaltenen Bypassventil (7) versehene Leitung mit der ersten Filterkammer verbunden ist, **dadurch gekennzeichnet, dass** die zweite Filterkammer durch eine erste, obere Kappe (51) gebildet ist, die über Streben (52) mit einer zweiten, unteren Kappe verbunden ist, wodurch ein Stützkäfig (5) für das zweite Filterelement (6) gebildet ist, welches um die Streben (52) herum positioniert ist, wobei die Streben (52) an der ersten bzw. der zweiten Kappe (51) angeformt sind und in Aufnahmen der zweiten bzw. der ersten Kappe (51) eingreifen, wobei der Stützkäfig (5) zusammen mit dem ersten Filterelement (4) über eine Feder (124) gegen die Filteranschlussplatte (54), die an dem Hülsenteil (3) anliegt, vorgespannt ist, wobei das Hülsenteil (3) einen innerhalb des Kopfgehäuses (11) des Anschlusskopfes (1) angeordneten Vorsprung hintergreift und wobei an die erste, obere Kappe (51) beabstandet zu den Streben (52) wenigstens ein Hohlzylinder (53) angeformt ist, in dem der Ventilstempel (71) eines Bypassventils (7) verschiebbar geführt ist.

2. Saugrücklauffilter nach Anspruch 1, **dadurch gekennzeichnet, dass** die zweite, untere Kappe durch die Filteranschlussplatte (54) des Anschlusskopfes (1) gebildet ist, wobei deren Rohrstutzen (56) einen beabstandet zur Filteranschlussplatte (54) angeordneten Anschlag (561) aufweist, an dem das erste Filterelement (4) anliegt.

3. Saugrücklauffilter nach Anspruch 1 oder 2, **dadurch gekennzeichnet, dass** die wenigstens eine Leitung durch jeweils eine in der Filteranschlussplatte (54) beabstandet zum Rohrstutzen (56) eingebrachte Bohrung (55) gebildet ist.

4. Saugrücklauffilter nach einem der vorgenannten Ansprüche, **dadurch gekennzeichnet, dass** mehrere, bevorzugt drei mit Bypassventilen (7) versehene Leitungen vorhanden sind.

5. Saugrücklauffilter nach einem der vorgenannten Ansprüche, **dadurch gekennzeichnet, dass** das zweite Filterelement (6) gröber als das erste Filterelement (4) ausgebildet ist.

6. Saugrückfilter nach einem der vorgenannten Ansprüche, **dadurch gekennzeichnet, dass** an dem Anschlusskopf (1) wenigstens ein Anschluss (16) für eine Kühlbypassleitung angeordnet ist.

## Claims

1. Suction return filter with a filter housing, comprising a connecting head (1) which has two service connections and a tank connecting piece (2) provided with a tank connection, between which a sleeve part (3) forming a first filter chamber is attached, which surrounds a first filter element which is received by filter connection plates (54) sealingly arranged in the connecting head and the tank connecting piece, each having a tube connector, wherein in the tank connection a spring-loaded non-return valve (8) is arranged as well as a load-free non-return valve, which is designed as an integral part of the spring-loaded non-return valve, **characterised in that** in the connecting head (1) a second filter chamber is arranged, which receives a second filter element (6) and which is connected to the first filter chamber via at least one line provided with a bypass valve (7) held in a closed position in a spring-loaded manner, **characterised in that** the second filter chamber is formed by a first, upper cap (51), which is connected to a second, lower cap via struts (52), whereby a support cage (5) is formed for the second filter element (6), which is positioned around the struts (52), wherein the struts (52) are moulded on the first or the second cap (51) and engage in receptacles of the second or the first cap (51), wherein the support cage (5) together with the first filter element (4) is prestressed via a spring (124) against the filter connection plate (54), which abuts on the sleeve part (3), wherein the sleeve part (3) engages behind a projection arranged within the head housing (11) of the connecting head (1) and wherein at least one hollow cylinder (53) is moulded on the first, upper cap (51) at a distance from the struts (52), in which the valve plunger (71) of a bypass valve (7) is displaceably guided.

2. Suction return filter according to claim 1, **characterised in that** the second, lower cap is formed by the filter connection plate (54) of the connecting head (1), wherein its tube connector (56) has a stop (561) arranged at a distance from the filter connection plate (54), on which the first filter element (4) abuts.

3. Suction return filter according to claim 1 or 2, **characterised in that** the at least one line is formed by a bore (55) respectively inserted in the filter connection plate (54) at a distance from the tube connector (56).

4. Suction return filter according to one of the previous claims, **characterised in that** several, preferably three lines equipped with bypass valves (7) are provided.

5. Suction return filter according to one of the previous claims, **characterised in that** the second filter element (6) is more coarsely designed than the first filter element (4).

6. Suction return filter according to one of the previous claims, **characterised in that** at least one connection (16) for a cooling bypass line is arranged at the connecting head (1).

## Revendications

1. Filtre de retour d'aspiration équipé d'un boîtier de filtre, comprenant une tête de raccordement qui présente deux raccords utilitaires, et une pièce de raccordement (2) à un réservoir munie d'un raccord, entre lesquelles est fixée une douille (3) formant une première chambre de filtre, douille qui entoure un premier élément filtrant logé dans des plaques (54) de raccordement au filtre présentant chacune un embout tubulaire et disposées de manière étanchéisante dans la tête de raccordement et la pièce de raccordement à un réservoir)), sachant que dans le raccord de réservoir est disposée une vanne à clapet antiretour (8) sous contrainte ressort, ainsi qu'une vanne à clapet antiretour sans contrainte configurée comme faisant partie intégrante de la vanne à clapet antiretour sous contrainte ressort, **caractérisé en ce que** dans la tête de raccordement (1) est disposée une deuxième chambre de filtre qui reçoit un deuxième élément filtrant (6) et qui est reliée à la première chambre de filtre via au moins une conduite équipée d'une vanne de bypass (7) maintenue par contrainte ressort en position de fermeture, **caractérisé en ce que** la deuxième chambre de filtre est formée par une première coiffe (51) supérieure qui est reliée via des renforts (52) avec une deuxième coiffe inférieure, ce qui forme une cage d'appui (5) pour le deuxième élément filtrant (6) qui est positionné autour des renforts (52), sachant que les renforts (52) sont modelés contre la première et/ou la deuxième coiffe (51) et qu'ils engrènent dans des logements de la deuxième et/ou de la première coiffe (51), sachant que la cage d'appui (5) est précontrainte avec le premier élément filtrant (4), via un ressort (124), contre la plaque (54) de raccordement au filtre, plaque qui applique contre la douille (3), sachant que la douille (3) passe derrière une saillie disposée à l'intérieur du boîtier (11) de la tête de raccordement (1) et sachant qu'est modelé contre la première coiffe (51) supérieure, à distance des renforts (52), au moins un cylindre creux (53) dans lequel le piston (71) d'une vanne de bypass (7) est déplaçable de manière guidée.

2. Filtre de retour d'aspiration selon la revendication 1, **caractérisé en ce que** la deuxième coiffe, inférieure, est formée par la plaque (54) de raccordement au filtre de la tête de raccordement (1), sachant que son embout tubulaire (56) présente une butée (561) distante de la plaque (54) de raccordement au filtre, butée contre laquelle applique le premier élément filtrant (4).

3. Filtre de retour d'aspiration selon l'une des revendications 1 ou 2, **caractérisé en ce qu'**au moins une conduite est formée respectivement par un alésage (55) ménagé dans la plaque (54) de raccordement au filtre, à distance de l'embout tubulaire (56).

4. Filtre de retour d'aspiration selon l'une des revendications précédentes, **caractérisé en ce que** sont présentes plusieurs conduites, trois de préférence, équipées de vannes de bypass (7).

5. Filtre de retour d'aspiration selon l'une des revendications précédentes, **caractérisé en ce que** le deuxième élément filtrant (6) est configuré plus grossier que le premier élément filtrant (4).

6. Filtre de retour d'aspiration selon l'une des revendications précédentes, **caractérisé en ce que** contre la tête de raccordement (1) est disposé au moins un raccord (16) pour une conduite de bypass de refroidissement.
